# EUROPÄISCHE PATENTSCHRIFT

(11) **EP 4 327 045 B1**
(45) Veröffentlichungstag und Bekanntmachung des Hinweises auf die Patenterteilung: **15.01.2025**
(21) Anmeldenummer: 22725384.6
(22) Anmeldetag: 21.04.2022
(51) Int. Cl.: G01B 5/04, G01B 7/04, G01B 11/04, G01N 21/896

(54) **VORRICHTUNG ZUM VERMESSEN VON PLATTENFÖRMIGEN WERKSTÜCKEN, INSBESONDERE VON FLACHGLASSCHEIBEN ODER ISOLIERGLASELEMENTEN**
APPARATUS FOR MEASURING SHEET-LIKE WORKPIECES, IN PARTICULAR FLAT GLASS PANES OR INSULATING GLASS ELEMENTS
DISPOSITIF DE MESURE DE PIÈCES EN FORME DE PLAQUES, EN PARTICULIER DES VITRES PLATES OU DES ÉLÉMENTS EN VERRE ISOLANT

(30) Priorität: 22.04.2021 DE 102021110360
(43) Veröffentlichungstag der Anmeldung: 28.02.2024
(73) Patentinhaber: LISEC Austria GmbH, 3353 Seitenstetten (AT)
(72) Erfinder: LININGER, Markus, 3353 Seitenstetten (AT)
(74) Vertreter: Wunderlich & Heim Patentanwälte PartG mbB
(86) Internationale Anmeldenummer: PCT/EP2022/060627
(87) Internationale Veröffentlichungsnummer: WO 2022/223735

(56) Entgegenhaltungen:
- WO-A1-2017/161390
- KR-A- 20120 031 872
- US-A- 2 910 908

## Beschreibung

Die Erfindung betrifft eine Vorrichtung zum Vermessen von platten- oder tafelförmigen Werkstücken, insbesondere von Flachglasscheiben oder Isolierglaselementen.

Eine solche Vorrichtung kann als eigenständige Komponente in einer Fördervorrichtung einer Produktionsanlage integriert oder mit einer Bearbeitungsvorrichtung, beispielsweise einer Versiegelungsvorrichtung, einer Schleif- oder einer Schneidvorrichtung oder einer Vorrichtung zum Applizieren eines Abstandhalters bei der Herstellung von Isolierglaselementen kombiniert sein.

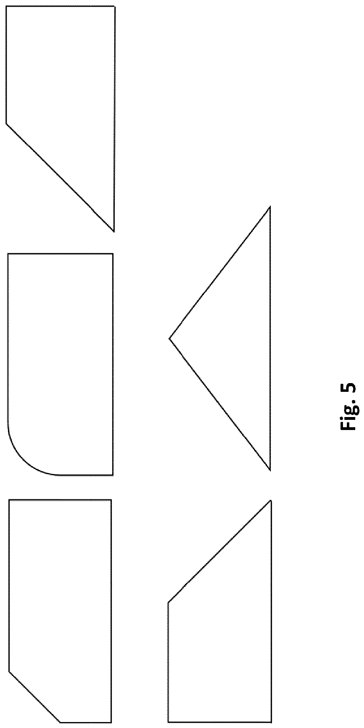

In Produktionsprozessen von platten- oder tafelförmigen Werkstücken, insbesondere von Flachglasscheiben oder Isolierglaselementen, ist es üblich, die Abmessungen, d.h. die Geometrie der Außenkontur zu vermessen, um diese für Dokumentationszwecke oder zur Steuerung von Förder- oder Bearbeitungsprozessen zu verwenden. Dabei können die platten- oder tafelförmigen Werkstücke rechteckig oder quadratisch oder als Sonderformen ausgebildet sein. Die Fig. 5 zeigt Beispiele von Sonderformen von Flachglasscheiben oder Isolierglaselementen, die mit der Messvorrichtung vermessen werden können.

Üblicherweise werden die Abmessungen als Koordinaten von markanten Randpunkten der Außenkontur in einem rechtwinkligen Koordinatensystem bestimmt, bei dem eine X-Achse oder Koordinate die Länge des Werkstücks parallel zu einer Förderrichtung ist, eine Z-Achse oder Koordinate die Dicke des Werkstücks normal bzw. quer zu der Förderrichtung ist, und eine Y-Achse oder Koordinate die Höhe des Werkstücks normal zu der X- und der Z-Achse ist. Die Vermessung der Höhe (Y-Achse) und der Dicke (Z-Achse) stellt dabei selbst bei großen plattenförmigen Werkstücken in der Regel keine Schwierigkeit dar, weil es sich bei der Dicke und der Höhe um Größen handelt, die durch die Durchlaufbreite bzw. die Höhe der Vorrichtung oder Bearbeitungsanlage begrenzt sind. Die Vermessung der Länge (X-Achse) ist dagegen dann schwierig, wenn die maximale Abmessung des Werkstücks die Länge der Vorrichtung übersteigt. In diesen Fällen wird die Länge in der Regel kontinuierlich während eines Transport- oder Fördervorgangs des Werkstücks in der Richtung der X-Achse gemessen.

Aus der DE 196 41 861 A1 ist eine derartige Vorrichtung zum Ermitteln der Form von tafelförmigen Gegenständen, insbesondere Isolierglasscheiben, bekannt, die eine Stützeinrichtung, an welcher der tafelförmige Gegenstand anliegt, optische Sensoren, eine Fördereinrichtung, um den tafelförmigen Gegenstand und die optischen Sensoren relativ zueinander zu bewegen, und eine Einrichtung zum Ermitteln des Förderweges als X-Koordinate des tafelförmigen Gegenstands in Form eines Weggebers des Antriebs der Fördereinrichtung aufweist. Es ist eine Vielzahl optischer Sensoren vorgesehen, die in wenigstens einer Reihe parallel zur Ebene des tafelförmigen Gegenstandes sowie im Winkel zur Förderrichtung ausgerichtet sind, um eine Y-Koordinate des tafelförmigen Gegenstands zu bestimmen. Durch Zuordnung der X- und Y-Koordinaten zueinander kann die gesamte Außenkontur bestimmt werden.

Ein Nachteil der Vermessung der Länge bzw. X-Koordinate des Werkstücks in Förderrichtung über einen Weggeber des Antriebs der Fördereinrichtung besteht darin, dass ein Schlupf zwischen der Fördereinrichtung und dem Werkstück, der beim Abbremsen und Beschleunigen der Fördereinrichtung auftritt, insbesondere wenn das Werkstück auf Förderrollen oder Förderbändern aufliegt und nur durch die aus der Schwerkraft resultierende Reibung gehalten ist, unweigerlich zu einem Messfehler bei der Bestimmung der Größe bzw. der Position und der Koordinaten des Werkstücks bzw. von markanten Punkten an dem Werkstück, an denen bestimmte Bearbeitungen ausgeführt werden sollen, führt.

Aus der EP 3 433 576 B1 ist eine Inspektionsanlage zum optischen Prüfen einer Flachglasscheibe bekannt, bei der die Flachglasscheibe mit einer unteren Stirnseite auf einem Förderband aufliegt und durch dieses mit einer leicht zur Seite (in Querrichtung) geneigten Ebene bzw. Hauptfläche der Flachglasscheibe horizontal an einer stationären optischen Prüfeinheit vorbei bewegt wird, welche Unregelmäßigkeiten (Verschmutzungen, Bohrungen, Kratzer, Ränder) auf der Flachglasscheibe erfasst. Um die Positionen dieser Unregelmäßigkeiten auch in der zur Förderrichtung parallelen Richtung eindeutig zuzuordnen, wird die jeweilige Position der Flachglasscheibe in der zur Förderrichtung des Förderbandes parallelen Richtung mit einer Messvorrichtung kontinuierlich gemessen, welche einen ortsfesten Längenmaßstab und einen mit der Flachglasscheibe mitbewegten Messschieber aufweist, dessen Relativposition zum Längenmaßstab sensorisch erfassbar ist.

Der Messschieber ist an einem Trägerprofil verschiebbar gehalten. Er weist einen Anschlagteil auf, welcher relativ zum Messschieber um eine Achse schwenkbar ist, welche parallel zur Scheibenebene der Flachglasscheibe liegt, sodass er mit seiner Anschlagfläche mit der Flachglasscheibe in die Ebene der Flachglasscheibe schwenkbar ist bzw. daraus wegschwenkbar ist. Der Messschieber wird durch die Flachglasscheibe, an deren in Bewegungsrichtung vorne liegender Stirnfläche der Anschlagteil im eingeschwenkten Zustand anliegt, entlang dem Längenmaßstab verschoben. Wenn der Messschieber an einen Signalgeber gelangt, oder wenn erkannt wurde, dass die Flachglasscheibe die Prüfungseinheit vollständig passiert hat, wird der Anschlagteil aus der Ebene der Flachglasscheibe herausgeschwenkt, sodass der Messschieber nicht mehr mit der Flachglasscheibe mitbewegt wird.

Mittels eines Förderriemens wird der Messschieber entgegen der Förderrichtung des Förderbandes in seine Ausgangsposition zurückbewegt, wo der Messschieber mit seinem Anschlagteil im eingeschwenkten Zustand auf das Eintreffen der nächsten Flachglasscheibe wartet, bis deren in Bewegungsrichtung des Förderbandes vorne liegende Stirnseite an den Anschlagteil anschlägt, was die zur Bewegung der nächsten Flachglasscheibe synchrone Verschiebung des Messschiebers entlang des Längenmaßstabes mit dieser bewirkt.

Für den Fall, dass die in Bewegungsrichtung vorne liegende Stirnseite der Flachglasscheibe nicht normal zur Bewegungsrichtung ausgerichtet ist, sondern in Bewegungsrichtung unterschiedlich weit vorne liegende Bereiche hat, wie beispielsweise bei den in Fig. 5 gezeigten Sonderformen, und/oder wenn die Flachglasscheibe in Bewegungsrichtung sehr lang ist, hat die Inspektionsanlage gemäß der EP 3 433 576 B1 zwei Messvorrichtungen, die jeweils einen Längenmaßstab und einen zugehörigen Messschieber aufweisen. Für derartige Sonderformen sind die Messvorrichtungen in Bewegungsrichtung der Flachglasscheibe und in der Höhenrichtung versetzt zueinander angeordnet und die Messbereiche überlappen sich.

Der bei der Bewegung der Flachglasscheibe an seinem Anschlagteil zuerst kontaktierte Messschieber detektiert die Bewegung und damit die Koordinaten der Flachglasscheibe in Bewegungsrichtung schon bevor irgendein Bereich der Flachglasscheibe an die optische Prüfungseinheit gelangt. Nachdem die Flachglasscheibe so weit bewegt wurde, dass ihre vordere Stirnseite auch den Anschlagteil des Messschiebers des nachgeordneten Längenmaßstabes kontaktiert hat, übernimmt dieser Messschieber das Detektieren der Bewegungskoordinaten der Flachglasscheibe. Der Anschlagteil des zuvor aktiven Messschiebers wird von der Flachglasscheibe außer Kontakt gebracht und der Messschieber wird durch seinen eigenen Antrieb entgegen der Bewegungsrichtung der Flachglasscheibe zurückbewegt. Sobald die in deren Bewegungsrichtung hinten liegende Stirnseite der Flachglasscheibe den Messschieber passiert hat, kann dieser mittels seines eigenen Antriebs von hinten her so an die Flachglasscheibe angefahren werden, dass er mit seinem in Bewegungsrichtung vorne liegenden Anschlagteil an der hinteren Stirnseite der Flachglasscheibe anliegt. Damit kann nun wieder der hintere Messschieber das Detektieren der Bewegungskoordinaten der Flachglasscheibe übernehmen. Auf diese Weise können die Bewegungskoordinaten der Flachglasscheibe auch dann lückenlos aufgezeichnet werden, wenn die Flachglasscheibe so lang ist, dass sie mit ihrem vorderen Flächenbereich schon über das der optischen Prüfungseinheit abgewandt liegende Ende des Messbereichs des in Bewegungsrichtung nachgereihten Längenmaßstabs hinausragt, bevor sie mit ihrer hinteren Stirnfläche die optische Prüfungseinheit vollständig passiert hat.

Während bei dieser Vorrichtung die Abmessung bzw. Koordinate in der Längsrichtung durch den Messschieber unabhängig von Schlupfeinflüssen des Antriebs bestimmt werden kann, ist die maximale Länge der Werkstücke, die vermessen werden kann, begrenzt, weil immer einer der beiden Messschieber im Bewegungsbereich der Vorrichtung an einer in Förderrichtung vorne oder hinten liegenden Stirnseite des Werkstücks anliegen muss. Außerdem erfordert das Anliegen des Messschiebers an der hinteren Stirnseite einen aktiven Antrieb des Messschiebers während des Messvorgangs, der mit der Fördereinrichtung des Werkstücks synchronisiert werden muss, was einen relativ komplexen Vorgang darstellt.

Aufgabe der Erfindung ist die Bereitstellung einer Vorrichtung zum Vermessen von platten- oder tafelförmigen Werkstücken, insbesondere von Flachglasscheiben oder Isolierglaselementen, mit der auch sehr lange Werkstücke, sog. Überformate, mit hoher Genauigkeit vermessen werden können.

Zur Lösung stellt die Erfindung eine Vorrichtung zum Vermessen von platten- oder tafelförmigen Werkstücken, insbesondere von Flachglasscheiben oder Isolierglaselementen mit den Merkmalen des Patentanspruches 1 bereit. Bevorzugte Ausgestaltungen sind in den abhängigen Ansprüchen angegeben.

Die Erfindung betrifft insbesondere eine Vorrichtung zum Vermessen von plattenförmigen Werkstücken, insbesondere von Flachglasscheiben oder Isolierglaselementen, mit einer Fördereinrichtung zum Befördern der plattenförmigen Werkstücke in einer Förderrichtung entlang einer Transportstrecke oder Förderstrecke, einer ersten Messeinrichtung und einer zweiten Messeinrichtung, wobei jede der Messeinrichtungen einen Mitnehmer aufweist, der so konfiguriert ist, dass er selektiv mit einem plattenförmigen Werkstück koppelbar und von diesem entkoppelbar ist, dass er im gekoppelten Zustand mit diesem in der Förderrichtung mitbewegbar ist, und dass er im entkoppelten Zustand in einer Richtung entgegengesetzt zu der Förderrichtung aktiv bewegbar ist, und der einem vorzugsweise feststehenden/ortsfesten Messlineal zugeordnet ist, das sich in der Förderrichtung erstreckt, derart, dass eine Position und/oder eine Bewegungsstrecke des Mitnehmers in der Förderrichtung erfasst werden kann/können, wobei die Messlineale der ersten und der zweiten Messeinrichtung so angeordnet sind, dass sie unterschiedliche Bereiche der Förderstrecke des plattenförmigen Werkstücks in der Förderrichtung erfassen, und wobei die Mitnehmer der ersten und der zweiten Messeinrichtung so ausgestaltet sind, dass sie mit einer Hauptfläche des plattenförmigen Werkstücks koppelbar und von dieser entkoppelbar sind.

Ein Vorteil der erfindungsgemäßen Vorrichtung zum Vermessen von plattenförmigen Werkstücken besteht darin, dass die Vermessung jedenfalls der Länge bzw. der Koordinaten in der Längsrichtung (X-Richtung parallel zu der Förderrichtung) auch bei sehr langen Werkstücken, deren Längen die Baugröße der Vorrichtung selbst deutlich übersteigen, mit großer Genauigkeit und ohne Einflüsse von Schlupf erfolgen kann. Im Prinzip ist mit der Erfindung durch wiederholtes Umsetzen der Mitnehmer der beiden oder ggf. weiterer Messeinrichtungen an der Hauptfläche des Werkstücks eine "endlose" Messung der Länge ohne Unterbrechung des Transports bzw. der Förderung möglich.

Durch das Ansetzen der Mitnehmer, insbesondere in der Form von Saugern, an der Hauptfläche des Werkstücks werden Beschädigungen und/oder Verunreinigungen an den durch die nahe beieinanderliegenden Ecken der Schnittkanten meist empfindlichen Stirnflächen an der Stirnseite vermieden. Die Hauptflächen können demgegenüber einfach auch am Ende eines Herstellungsprozesses gereinigt oder durchgängig durch Schutzfolien geschützt sein.

Vorzugsweise sind die Mitnehmer ausgestaltet, um mit dem jeweils zugeordneten Messlineal kontaktlos oder mechanisch zusammenzuwirken, um die Position und/oder die Bewegungsstrecke des jeweiligen Mitnehmers in der Förderrichtung zu erfassen.

Vorzugsweise sind die Mitnehmer jeweils einer Transporteinrichtung zugeordnet, die ausgestaltet ist, um die Bewegung des jeweiligen Mitnehmers in der Förderrichtung zu führen und den jeweiligen Mitnehmer in der Richtung entgegengesetzt zu der Förderrichtung über einen Antrieb aktiv zu bewegen.

Vorzugsweise sind die Mitnehmer jeweils auf einem Schlitten angebracht, der entlang einer Führung der Transporteinrichtung bewegbar ist.

Vorzugsweise ist der Schlitten in zwei Abschnitte unterteilt, die sich relativ zueinander in der Förderrichtung bewegen können und wobei der Mitnehmer an einem der Abschnitte angebracht ist, der auch mit dem Messlineal gekoppelt ist, und der andere Abschnitt ist mit dem Antrieb gekoppelt.

Vorzugsweise sind die beiden Abschnitte des Schlittens über einen Zylinder miteinander gekoppelt, der zwischen einem ersten Zustand, in dem er die beiden Abschnitte starr miteinander verbindet, und einem zweiten Zustand, in dem eine gedämpfte Relativbewegung zwischen den beiden Abschnitten ermöglicht ist, umgeschaltet werden kann. Vorzugsweise weisen die Transporteinrichtung einen Linearantrieb oder einen Umlaufantrieb, vorzugsweise ein Schleppband oder eine Schleppkette auf.

Vorzugsweise weisen die Mitnehmer jeweils einen Sauggreifer auf, der an der Hauptfläche des plattenförmigen Werkstücks ankoppelbar und von dieser entkoppelbar ist.

Vorzugsweise ist die Fördereinrichtung so ausgestaltet ist, dass das plattenförmige Werkstück auf der Fördereinrichtung in einer vertikalen oder in einer gegenüber der Vertikalen geneigten Orientierung befördert werden kann.

Vorzugsweise weist die Fördereinrichtung einen Rollenförderer oder einen Bandförderer oder eine Kombination derselben auf.

Vorzugsweise weist die Fördereinrichtung einen Förderantrieb auf, um das plattenförmige Werkstück aktiv in der Förderrichtung zu befördern.

Vorzugsweise weist die Vorrichtung eine weitere Messeinrichtung zur Erfassung einer Abmessung des plattenförmigen Werkstücks in einer Richtung senkrecht zu der Förderrichtung auf.

Vorzugsweise weist die Vorrichtung zum Vermessen von plattenförmigen Werkstücken eine Steuereinrichtung auf, die ausgestaltet ist, um das Koppeln und Entkoppeln der Mitnehmer der ersten und der zweiten Messeinrichtung so zu steuern, dass während der Bewegung des plattenförmigen Werkstücks immer zumindest einer der Mitnehmer mit diesem gekoppelt ist, und um auf Basis der erfassten Positionen und/oder Bewegungsstrecken der Mitnehmer der ersten und zweiten Messeinrichtung eine kumulierte Bewegungsstrecke dieses Werkstücks in der Förderrichtung zu ermitteln.

Vorzugsweise ist die Steuereinrichtung ausgestaltet, um das Erfassungsergebnis der weiteren Messeinrichtung der über die Mitnehmer ersten und zweiten Messeinrichtung ermittelten kumulierten Bewegungsstrecke des Werkstücks zuzuordnen, um eine Kontur und/oder beliebige Bereiche des Werkstücks zu bestimmen.

Im Folgenden wird die Erfindung anhand einer bevorzugten Ausführungsform mit Bezug auf die Figuren beispielhaft beschrieben.
Fig. 1a zeigt eine schematische perspektivische Vorderansicht einer Vorrichtung zum Vermessen von plattenförmigen Werkstücken;
Fig. 1b zeigt die schematische Vorderansicht der Vorrichtung von Fig. 1a zur Erläuterung des Mess- und Funktionsprinzips;
Fig. 2 zeigt eine schematische Vorderansicht einer Vorrichtung zum Vermessen von plattenförmigen Werkstücken in einer Abwandlung mit einer dritten Messeinrichtung;
Fig. 3a zeigt eine Vorderansicht einer Vorrichtung zum Vermessen von plattenförmigen Werkstücken in einer Ausführungsform;
Fig. 3b zeigt eine perspektivische Vorderansicht der Vorrichtung von Fig. 3a;
Fig. 3c zeigt isoliert das Detail der Messeinrichtungen der Vorrichtung von Fig. 3a und 3b von hinten betrachtet;
Fig. 4 zeigt schematisch das Detail des Schlittens und des Mitnehmers in Form eines Saugers bei einer Messeinrichtung;
Fig. 5 zeigt Beispiele von Sonderformen von Flachglasscheiben oder Isolierglaselementen, die mit der Messvorrichtung vermessen werden können.

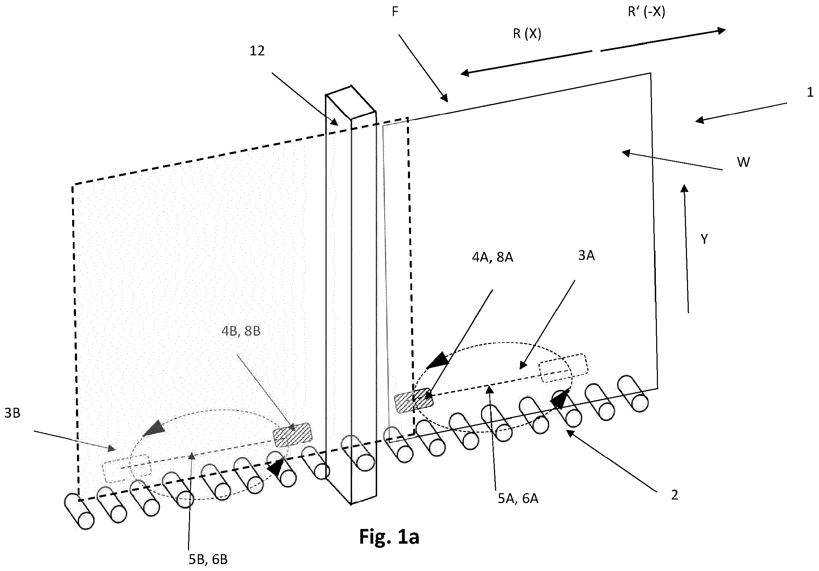

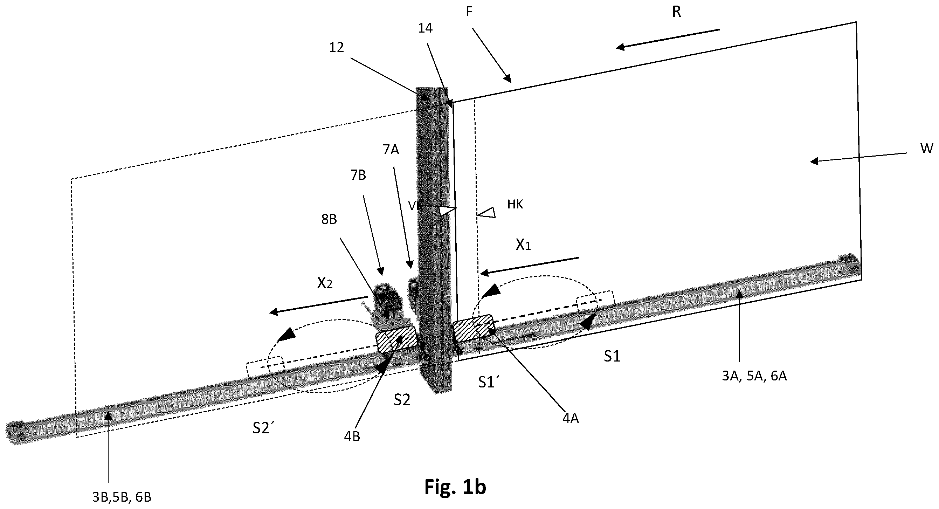

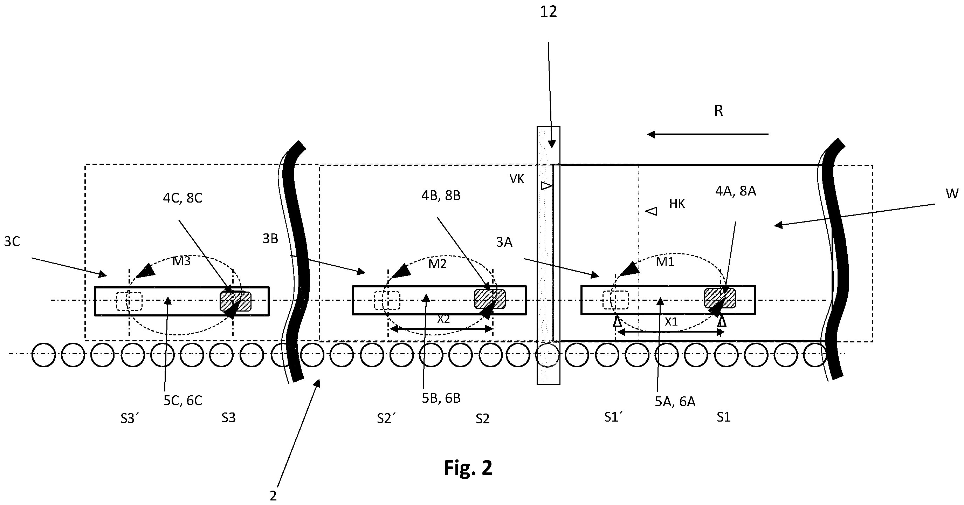

Die in Fig. 1a, 1b und 2 schematisch dargestellten Ausführungsformen einer erfindungsgemäßen Vorrichtung 1 zum Vermessen von plattenförmigen Werkstücken W (im Folgenden einfach als "Messvorrichtung" bezeichnet), insbesondere von Flachglasscheiben oder Isolierglaselementen, umfassen eine Fördereinrichtung 2 zum Befördern der plattenförmigen Werkstücke W in einer Förderrichtung R, die typischerweise parallel zu der X-Richtung der Messung ist, entlang einer Förderstrecke.

Die Fördereinrichtung 2 ist dabei so ausgestaltet, dass ein plattenförmiges Werkstück W auf der Fördereinrichtung 2 in einer vertikalen oder in einer gegenüber der Vertikalen um wenige Grad geneigten Orientierung befördert werden kann, während das Werkstück W dabei an seinem unteren Seitenrand auf der Fördereinrichtung 2 aufsteht und im oberen Bereich an einer der beiden gegenüberliegenden Hauptflächen F, die die Hauptebenen des Werkstücks definieren, gegen eine seitliche Führung an einem Gestell, üblicherweise mit Rollen oder Kugeln zur Verringerung der Reibung, abgestützt ist.

Die Fördereinrichtung 2 kann intermittierend betrieben werden, arbeitet aber während der Vermessung eines Werkstücks typischerweise kontinuierlich. Ein generell kontinuierlicher Betrieb ist vorteilhaft, um Beschleunigungs- und Verzögerungseinflüsse zu minimieren und den Durchsatz zu erhöhen.

Die Messvorrichtung 1 gemäß der Variante der Figuren 1a und 1b umfasst ferner eine erste Messeinrichtung 3A und eine zweite Messeinrichtung 3B und die Variante der Fig. 2 umfasst eine weitere Messeinrichtung 3C, die im Prinzip alle jeweils gleichartig ausgestaltet und aufgebaut sind und unabhängig voneinander betrieben werden können. Jede der Messeinrichtungen 3A,3B,3C weist einen Mitnehmer 4A,4B,4C auf, der so konfiguriert ist, dass er selektiv mit einer Hauptfläche F des plattenförmigen Werkstücks W koppelbar und von diesem entkoppelbar ist, dass er im gekoppelten Zustand mit diesem in der Förderrichtung R (der Richtung der X-Achse) passiv oder zwangsweise mitbewegbar ist, und dass er im entkoppelten Zustand in einer Richtung R' entgegengesetzt zu der Förderrichtung R aktiv bewegbar ist, und der einem an der Messvorrichtung feststehenden/ortsfesten Messlineal 5A,5B,5C zugeordnet ist, das sich in der Förderrichtung R (der Richtung der X-Achse) erstreckt, derart, dass eine Position und/oder eine Bewegungsstrecke des Mitnehmers 4A,4B,4C in der Förderrichtung R (der Richtung der X-Achse) erfasst werden kann/können. Aus der Erfassung der Bewegung am Messlineal kann auch die Geschwindigkeit der Bewegung des jeweiligen Mitnehmers 4A,4B,4C und damit die tatsächliche Geschwindigkeit der Bewegung des Werkstücks W ermittelt werden.

Die Messlineale 5A,5B der ersten und der zweiten Messeinrichtung 3A,3B (und ggf. der dritten oder jeder weiteren Messeinrichtung 3C) sind so angeordnet, dass sie unterschiedliche Bereiche der Förderstrecke des plattenförmigen Werkstücks W in der Förderrichtung R erfassen. Die Messlineale können, müssen sich aber nicht überlappen, sofern Abstände bzw. Positionen der Ausgangsstellungen der Mitnehmer innerhalb der Vorrichtung in der Förderrichtung bekannt oder bestimmbar sind.

Bei der in Fig. 1a, 1b gezeigten Messvorrichtung sind die Messeinrichtungen 3A,3B beidseitig, in der Förderrichtung, von einer weiteren Messeinrichtung 12 zur Erfassung einer Abmessung des plattenförmigen Werkstücks W in einer Höhenrichtung Y senkrecht zu der Förderrichtung R angeordnet. Bei der gezeigten Ausführungsform ist diese weitere Messeinrichtung 12 hinter einem Gestell angeordnet und erfasst das Werkstück durch einen Spalt 14 zwischen 2 nebeneinander angeordneten Gestellen 10 der Vorrichtung zum Abstützen des Werkstücks. Die weitere Messeinrichtung 12 kann aber auch an der Vorderseite des Gestells 10 angeordnet sein. Bei Anordnung hinter dem Gestell ist die Vorderseite frei für die Anordnung von Bearbeitungseinrichtungen. Diese weitere Messeinrichtung 12 kann beispielsweise wie die in der DE 196 41 861 A1 beschriebene Messeinrichtung mit einer oder mehreren Reihen von optischen Sensoren zur Erfassung der Höhenabmessung des Werkstücks, oder alternativ mit einer oder mehreren Zeilenkameras oder einem Laserscanner oder einer anderen geeigneten Messeinrichtung zur Bestimmung der Höhenabmessung bzw. der Koordinaten in der Höhenrichtung des Werkstücks (in Richtung der Y-Achse) ausgestattet sein. Die Verwendung eines Scanners ermöglicht die Erfassung des Verlaufs der Außenkontur von beliebigen Sonderformen von Werkstücken. Das sind Flachglaselemente, die von der rechteckigen Form abweichen - Beispiele derartiger Sonderformen sind in Fig. 5 dargestellt.

Die weitere Messeinrichtung 12 kann auch wie in der EP 3 433 576 B1 beschrieben mit einer optischen Prüfeinheit zur optischen Erfassung von weiteren Eigenschaften des Werkstücks (z.B. von Fehlern) kombiniert sein. Die weitere Messeinrichtung 12 kann darüber hinaus stationär oder in der Förderrichtung R bewegbar sein.

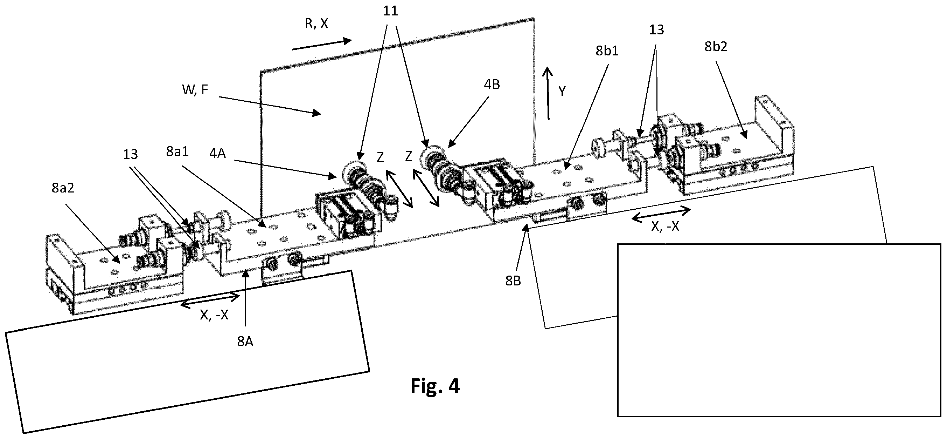

Erfindungsgemäß sind die Mitnehmer 4A,4B,4C der Messeinrichtungen 3A,3B,3C so ausgestaltet, dass sie mit der Hauptfläche F des plattenförmigen Werkstücks W selektiv koppelbar und von dieser entkoppelbar sind. Eine besonders bevorzugte Ausgestaltung dieser Mitnehmer ist in Form eines an sich bekannten Unterdruck- oder Sauggreifers 11 (siehe Fig. 4), der an der Hauptfläche F des plattenförmigen Werkstücks W ankoppelbar und von dieser entkoppelbar ist, indem er mit seinem Saugteller über einen nicht gezeigten Antrieb, beispielsweise einen Hydraulikzylinder, in der Richtung der Z-Achse bewegt und gegen die Fläche F gedrückt wird. Da der Sauggreifer nur dem Zweck der noch beschriebenen Messung der Bewegung des Werkstücks dient, nicht aber die eigentliche Beförderung des Werkstücks bewerkstelligt, kann dieser relativ klein ausgeführt sein und muss nur eine Haltekraft bzw. einen Unterdruck in dem Ausmaß aufweisen, dass er im angekoppelten Zustand aufgrund von Reibung im Antrieb, einer Geschwindigkeitsdifferenz im Antrieb oder aufgrund von Erschütterungen nicht relativ zu der Hauptfläche F verschoben wird. Daneben kann über dem Sauggreifer ein Überzieher angeordnet werden, damit dieser auf der Hauptfläche keine Abdrücke hinterlässt.

Die Mitnehmer 4A,4B,4C sind ausgestaltet, um mit dem jeweils zugeordneten ortsfesten Messlineal 5A,5B,5C kontaktlos oder mechanisch gekoppelt zusammenzuwirken, um die Position und/oder die Bewegungsstrecke des jeweiligen Mitnehmers 4A,4B,4C in der Förderrichtung R (der Richtung der X-Achse) zu erfassen. Eine kontaktlose Erfassung der Bewegung kann beispielsweise wie in der EP 3 433 576 B1 beschrieben mit einem magnetischen Messlineal und einem mit der Bewegung des Mitnehmers gekoppelten Sensor, der magnetische Feldstärkeänderungen entlang dem Messlineal erfassen kann, realisiert werden.

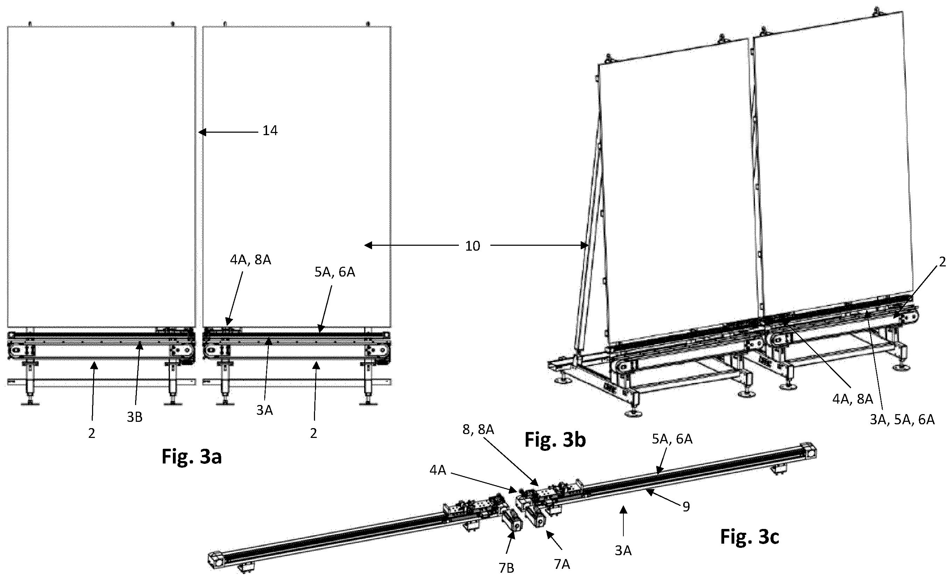

Daneben ist jedem Mitnehmer 4A,4B,4C jeweils eine (in den Figuren 1a, 1b und 2 nur durch die gestrichelten Linien bezüglich ihrer Funktion angedeutete) Transporteinrichtung 6A,6B,6C zugeordnet, die ausgestaltet ist, um die Bewegung des jeweiligen zugeordneten Mitnehmers 4A,4B,4C in der Förderrichtung R zu führen und den jeweiligen Mitnehmer 4A,4B,4C in der Richtung R' entgegengesetzt zu der Förderrichtung R über einen eigenen Antrieb 7A,7B,7C (siehe Fig. 3c) aktiv zu einer Ausgangsposition zu bewegen und zurückzuführen. Die Transporteinrichtung 6A,6B,6C kann einen Linearantrieb oder einen Umlaufantrieb in Form eines Schleppbands, eines Riemens oder einer Schleppkette aufweisen. Der Antrieb 7A,7B,7C ist dabei vorzugsweise so ansteuerbar, dass er den jeweiligen Mitnehmer 4A,4B,4C in der Förderrichtung R synchron mit dem Antrieb des Werkstücks W durch die Fördereinrichtung 2 bewegt, um auf den Mitnehmer 4A,4B,4C wirkende Kräfte in der Förderrichtung R, die dessen Anhaftung an der Fläche F des Werkstücks beeinträchtigen könnten, zu vermeiden. Der synchrone Antrieb der Mitnehmer 4A,4B,4C in der Förderrichtung R durch den Antrieb 7A,7B,7C der Transporteinrichtung 6A,6B,6C reduziert auch Trägheitseinflüsse.

Besonders bevorzugt ist eine Ausgestaltung, bei der der Antrieb 7A,7B,7C der jeweiligen Transporteinrichtung 6A,6B,6C durch Erfassen einer Vorderkante des herangeführten Werkstücks angesteuert wird, um den Mitnehmer 4A,4B,4C vor dem Anheften an dem Werkstück auf die Geschwindigkeit des Werkstücks zu beschleunigen. Eine entsprechende Beschleunigungsphase wird vorzugsweise auch vor dem Anheften des Mitnehmers der nachfolgenden Messeinrichtung ausgeführt. Alternativ kann in der Transporteinrichtung 6A,6B,6C auch eine Kupplung vorgesehen sein, die den Antrieb 7A,7B,7C bei der Bewegung des jeweiligen Mitnehmers 4A,4B,4C in der Förderrichtung R abkoppelt und dadurch die Reibung verringert.

Wie in Fig. 3c schematisch dargestellt kann innerhalb der jeweiligen Messeinrichtung 3A,3B,3C jeder Mitnehmer 4A,4B,4C jeweils auf einem Schlitten 8 (8A,8B,8C) angebracht sein, der entlang einer Führung 9 der Transporteinrichtung 6A,6B,6C bewegbar ist. Der Schlitten 8 ist, wie in Fig. 4 angedeutet, vorzugsweise in zwei Teilabschnitte 8a1,8a2 unterteilt, die sich relativ zueinander zumindest in der Förderrichtung R bewegen können. Jeder Mitnehmer 4A,4B,4C ist mit einem der Abschnitte 8a1,8a2 (8b1,8b2) des jeweiligen Schlittens 8,8A (8B), der auch mit dem Messlineal 5A,5B,5C gekoppelt ist, gekoppelt, und der andere Abschnitt 8a1,8a2 des Schlittens 8 ist wiederum mit der Transporteinrichtung 6A,6B,6C des jeweiligen Schlittens 8 gekoppelt. Die beiden Teilabschnitte 8a1,8a2 des Schlittens 8 sind über einen Zylinder 13 oder ein Paar von gegenläufigen Zylindern 13 wie dargestellt miteinander gekoppelt, der/die zwischen einem ersten Zustand, in dem er/sie die beiden Abschnitte 8a1,8a2 starr miteinander verbindet, und einem zweiten Zustand, in dem eine freie oder gedämpfte Relativbewegung zwischen den beiden Abschnitten 8a1,8a2 möglich ist (beispielsweise während der Messphase und/oder einer Beschleunigungsphase ausgehend von der Ausgangsstellung), umgeschaltet werden kann. Durch Bestimmung einer Differenz zwischen der am Messlineal 5A,5B,5C ermittelten Geschwindigkeit der Mitnehmer 4A,4B,4C und einer Geschwindigkeit der Fördereinrichtung 2 kann der Antrieb 7A,7B,7C der jeweiligen Transporteinrichtung 6A,6B,6C so angesteuert bzw. geregelt werden, dass diese Differenz ausgeglichen wird und die Antriebe synchron laufen, um auf die Mitnehmer 4A,4B,4C wirkende Kräfte in der Förderrichtung R zu vermeiden.

Der Schlitten 8 wirkt, beispielsweise über einen bereits beschriebenen Sensor, mit dem zugeordneten Messlineal 5A,5B,5C zusammen, um die Bewegungsstrecke und/oder Position entlang dem Messlineal zu bestimmen. Das Messlineal und die Transporteinrichtung können zur Bildung der Messeinrichtung in einer Einheit zusammengefasst sein, wie in Fig. 3c angedeutet ist.Bei der Ausführungsform der Fig. 3a,3b befinden sich die in Fig. 3c isoliert gezeigten Messeinrichtungen als Elemente in einem Bereich zwischen dem als Stützwand zum seitlichen Abstützen der Werkstücke wirkenden Gestell 10 und der Fördervorrichtung 2 zum Abstützen der plattenförmigen Werkstücke an deren Unterseite.

Im Folgenden wird anhand der Fig. 1b ein Messvorgang unter Verwendung der erfindungsgemäßen Messvorrichtung von Fig. 1a beschrieben.

Zunächst wird ein zu vermessendes Werkstück W auf der Fördereinrichtung 2 in der Förderrichtung R heranbefördert. Nach der Erfassung der in Förderrichtung vorderen Kante VK des Werkstücks W wird der Antrieb 7A der ersten Transporteinrichtung 6A der ersten Messeinrichtung 3A angesteuert, um den Mitnehmer (Sauger) 4A vor dem Anheften an dem Werkstück auf die Geschwindigkeit des Werkstücks W zu beschleunigen. Dann haftet sich der erste Mitnehmer (Sauger) 4A der ersten Messeinrichtung 3A in der Ausgangsposition S1 an der Hauptfläche des Werkstücks W an. Ab diesem Zeitpunkt beginnt die Messung der Transportstrecke des Werkstücks in der X-Richtung mittels des ersten Messlineals 5A der ersten Messeinrichtung 3A. Die Position S1 ist dabei in einer gewissen definierten Entfernung von der Vorderkante VK zurück entgegen der Förderrichtung R beabstandet.

Zur Erfassung der Vorderkante VK zum Zwecke des Beschleunigens der ersten Transporteinrichtung 6A der ersten Messeinrichtung 3A genügt ein einfacher optischer Sensor oder eine Lichtschranke. Zur Erfassung der Vorderkante VK zum Zwecke der Vermessung der Kontur genügt bei rechtwinkeligen Werkstücken ebenfalls ein einfacher optischer Sensor oder eine Lichtschranke. Bei abweichenden Formen kann die Vorderkante auch durch einen bereits beschriebenen Scanner 12 über der gesamten Höhe (Y-Richtung) erfasst werden (der Scanner 12 wird hier zur Beschreibung des Prinzips verwendet).

Mit der Erfassung der Vorderkante VK oder eines charakteristischen Messpunkts an dem Werkstück durch den Scanner 12 wird die Wegmessung der Bewegung des (ersten) Mitnehmers 4A (Sauger) der ersten Messeinrichtung 3A entlang dem ersten Messlineal 5A/M1 fortgesetzt. Da der Abstand XO zwischen dem Sensor/Scanner 12 bei der Erfassung der Vorderkante VK und der Ausgangsposition S1 des ersten Mitnehmers 4A am ersten Messlineal 5A bekannt ist, kann mit dem Start der Erfassung der Bewegung des ersten Mitnehmers 4A, der mit dem Werkstück gekoppelt ist, die Förderstrecke des Werkstücks entlang dem ersten Messlineal in der Richtung der X-Achse genau bestimmt werden.

Bei der Beförderung wird das Werkstück und mit diesem der erste Mitnehmer 4A von der Position S1 um die Strecke X1 in der Richtung der X-Achse bewegt und damit der vordere Abschnitt des Werkstücks über den Scanner 12 hinaus weiterbefördert.

Bevor der erste Mitnehmer 4A die Endposition S1' erreicht hat oder wenn die Vorderkante VK oder ein charakteristischer Messpunkt an dem Werkstück durch den Scanner 12 erfasst wird, wird der Antrieb 7B der zweiten Transporteinrichtung 6B der zweiten Messeinrichtung 3B angesteuert, um den Mitnehmer (Sauger) 4B vor dem Anheften an dem Werkstück auf die Geschwindigkeit des Werkstücks W zu beschleunigen. Kurz bevor der erste Mitnehmer 4A die Endposition S1' erreicht hat, wird auch der zweite Mitnehmer 4B der zweiten Messeinrichtung 3B in seiner Ausgangsposition S2 mit der Hauptfläche F des Werkstücks W gekoppelt. Kurzzeitig haften somit beide Mitnehmer 4A, 4B an dem Werkstück W an. Auch hier ist der Abstand der Ausgangsposition S2 des zweiten Mitnehmers 4B von dem Scanner 12 oder der Endposition S1' des ersten Mitnehmers 4A bekannt oder kann aus der nachfolgenden Messung entlang dem Messlineal 5B ermittelt werden.

Dann wird der erste Mitnehmer 4A von der Hauptfläche F des Werkstücks abgekoppelt. Während der zweite Mitnehmer 4B beim vorzugsweise kontinuierlichen Weitertranssport des Werkstücks W durch die Fördervorrichtung 2 in der Förderrichtung R mit dem Werkstück W gekoppelt bleibt und mit diesem um die Strecke X2 entlang dem zweiten Messlineal 5B in der Richtung der X-Achse mitbewegt wird, wird der erste Mitnehmer 4A durch die Transporteinrichtung 6A der ersten Messeinrichtung 3A in der Richtung R' entgegengesetzt zu der Förderrichtung R aktiv in seine Ausgangsposition S1 zurückbewegt. Die Regelung der Antriebsgeschwindigkeit des Antriebs 7B der zweiten Transporteinrichtung 6B der zweiten Messeinrichtung 3B synchron zu der der Fördervorrichtung 2 erfolgt in der beschriebenen Weise durch einen Vergleich der beiden Geschwindigkeiten und einem Ausgleich einer evtl. festgestellten Differenz.

Bevor der zweite Mitnehmer 4B seine Endposition S2' erreicht, wird wiederum der erste Mitnehmer 4A in seiner Ausgangsposition S1 mit der Hauptfläche F des Werkstücks gekoppelt, wie das bereits oben beschrieben wurde. Kurzzeitig haften somit wieder beide Mitnehmer 4A, 4B an dem Werkstück W an.

Nach dem Abkoppeln des zweiten Mitnehmers 4B von der Hauptfläche F des Werkstücks wiederholt sich der Vorgang, indem zum einen der zweite Mitnehmer 4B durch die Transporteinrichtung 6B der zweiten Messeinrichtung 3B in der Richtung R' entgegengesetzt zu der Förderrichtung R aktiv in seine Ausgangsposition S2 zurückbewegt wird und der erste Mitnehmer 4A über seine Kopplung mit dem Werkstück bei dessen Beförderung in der Förderrichtung R mitgenommen und dessen Bewegungsstrecke an dem ersten Messlineal 5A in der Richtung der X-Achse erfasst wird.

Dieser Vorgang wiederholt sich ggf. mehrmals bis die Hinterkante HK der Glasscheibe von dem Scanner 12 erfasst wird.

Aus der Erfassung der Vorderkante und der Hinterkante des Werkstücks und der Addition der bekannten Abstände zwischen den Ausgangspositionen S1, S2 der Mitnehmer 4A,4B und dem Scanner 12 und den an den Messlinealen 5A,5B der Messeinrichtungen gemessenen Bewegungsstrecken X1,X2 etc. in der Richtung der X-Achse der Mitnehmer 4A,4B kann die Gesamtlänge des Werkstücks in der X-Richtung (parallel zu der Förderrichtung R) in einem kontinuierlichen Vorgang genau bestimmt werden. Bei rechteckigen Werkstücken genügt die Erfassung der Höhe des Werkstücks in der Y-Richtung mittels des Scanners 12, so dass in Verbindung mit der Länge in der X-Richtung die Größe des Werkstücks und ggf. die Position von charakteristischen Messpunkten an diesem bestimmt werden kann. Bei ungleichmäßigen Werkstücken kann die Größe und Form durch die Kombination der Länge in der X-Richtung mit der Erfassung der Kontur der Vorder- und Hinterkante und ggf. der Veränderung der Höhe in der Y-Richtung anhand des Scanners ebenfalls genau erfasst werden.

Die Messvorrichtung umfasst zur Steuerung dieses Messvorgangs eine Steuereinrichtung, die ausgestaltet ist, um das Koppeln und Entkoppeln der Mitnehmer 4A,4B der ersten und der zweiten Messeinrichtung 3A,3B so zu steuern, dass während der Bewegung des plattenförmigen Werkstücks W immer zumindest einer der Mitnehmer 4A,4B mit diesem gekoppelt ist, und um auf Basis der erfassten Positionen und/oder Bewegungsstrecken der Mitnehmer 4A,4B der ersten und zweiten Messeinrichtung 3A,3B und vorgegebenen oder ermittelten Ausgangspositionen eine kumulierte Bewegungsstrecke des Werkstücks W in der Förderrichtung R (in der Richtung der X-Achse) zu ermitteln.

Um die gesamte Außenkontur des Werkstücks zu erfassen, ist die Steuereinrichtung ferner ausgestaltet, um das Erfassungsergebnis der weiteren Messeinrichtung 12 (Koordinaten von Messpunkten in der Y-Richtung) dem über die Mitnehmer 4A,4B der ersten und zweiten Messeinrichtung 3A,3B erfassten kumulierten Bewegungsstrecke des Werkstücks W**,** also den Koordinaten in der Richtung der X-Achse, zuzuordnen, um die gesamte Kontur des Werkstücks zu bestimmen.

Die derart zugeordneten Koordinaten des Werkstücks können auf einen anderen Bezugspunkt innerhalb einer Produktionsstrasse umgerechnet werden, dessen Entfernung vom Bezugspunkt oder Ursprung der Messvorrichtung bekannt ist, so dass nicht nur die Position des Werkstücks innerhalb der Produktionsstrasse jederzeit bestimmbar ist, sondern dass auch weitere Bearbeitungsvorgänge an anderen Bearbeitungsstationen mit Bezug auf die durch die Messvorrichtung bestimmten zugeordneten Koordinaten des Werkstücks genau gesteuert werden können.

Die Fig. 3a und 3b eine Vorderansicht einer anlagentechnisch etwas weiter konkretisierten Ausführungsform der Vorrichtung zum Vermessen von plattenförmigen Werkstücken. Bei dieser Vorrichtung ist ein Gestell 10 vorgesehen, an dem die plattenförmigen Werkstücke während der Beförderung in einer gegen über der Vertikalen leicht geneigten Stellung abgestützt sind. Die einzelnen Komponenten der Messvorrichtung, die vorstehend beschrieben wurden, sind ebenfalls an dem Gestell angeordnet, wobei die Verwendung derselben Bezugszeichen auf die gleichartige Funktion verweist und eine wiederholte detaillierte Beschreibung der Komponenten entfällt. Die Fig. 3c zeigt isoliert das Detail der Messeinrichtungen 3A,3B der Vorrichtung von Fig. 3a und 3b von hinten betrachtet.

Die Fördervorrichtung 2 für die Werkstücke kann, wie durch die Darstellung in Fig. 1a und 2 angedeutet, ein an sich bekannter Rollenförderer mit einer oder mehreren angetriebenen Rollen sein. Sie kann aber auch, wie in Fig. 3a, 3b angedeutet, ein ebenfalls an sich bekannter Bandförderer oder eine Kombination von verschiedenen Förderern sein. Bevorzugt weist die Fördervorrichtung einen eigenen Förderantrieb auf, um das plattenförmige Werkstück W aktiv in der Förderrichtung R zu befördern. Auch eine Kombination aus einer nicht selbst angetriebenen Fördereinrichtung zur Abstützung des Werkstücks an der Unterseite mit einer Antriebseinrichtung in Form von an sich bekannten Fördersaugern, die wie die Messeinrichtung an einer der Hauptflächen angreifen und das Werkstück befördern, ist denkbar.

Die erfindungsgemäße Messvorrichtung wurde mit Bezug auf die Ausführungsform von Fig. 1a, 1b mit zwei Messeinrichtungen beschrieben, deren Mitnehmer abwechselnd mit der Hauptfläche des Werkstücks gekoppelt und die bei dessen Bewegung in der Förderrichtung mitgenommen werden und deren Messlineale die Bewegung des Mitnehmers erfassen. Die Vorrichtung kann aber, wie in Fig. 2 angedeutet, eine dritte Messeinrichtung 3C und ggf. weitere Messeinrichtungen derselben Art in der Förderrichtung aufweisen, die in gleicher Weise abwechselnd mit dem Werkstück gekoppelt werden können. Bei dieser Ausführungsform kann beispielsweise nicht nur die Länge des Werkstücks einmal vermessen werden, sondern die Kontur bzw. Geometrie des Werkstücks für nachfolgende Bearbeitungsstationen aufbereitet und/oder die Position des Werkstücks innerhalb einer längeren Produktionsstrasse kontinuierlich erfasst und zur Steuerung diverser Bearbeitungsprozesse an jeweiligen Bearbeitungsstationen verwendet werden.

## Patentansprüche

1. Eine Vorrichtung (1) zum Vermessen von plattenförmigen Werkstücken (W), insbesondere von Flachglasscheiben oder Isolierglaselementen, mit:
einer Fördereinrichtung (2) zum Befördern der plattenförmigen Werkstücke (W) in einer Förderrichtung (R) entlang einer Förderstrecke,
einer ersten Messeinrichtung (3A) und einer zweiten Messeinrichtung (3B), wobei jede der Messeinrichtungen (3A,3B) einen Mitnehmer (4A,4B) aufweist, der so konfiguriert ist, dass er selektiv mit einem plattenförmigen Werkstück (W) koppelbar und von diesem entkoppelbar ist, dass er im gekoppelten Zustand mit diesem in der Förderrichtung (R) mitbewegbar ist, und dass er im entkoppelten Zustand in einer Richtung (R') entgegengesetzt zu der Förderrichtung (R) aktiv bewegbar ist, und der einem vorzugsweise feststehenden/ortsfesten Messlineal (5A,5B) zugeordnet ist, das sich in der Förderrichtung (R) erstreckt, derart, dass eine Position und/oder eine Bewegungsstrecke des Mitnehmers (4A,4B) in der Förderrichtung (R) erfasst werden kann/können,
wobei die Messlineale (5A,5B) der ersten und der zweiten Messeinrichtung (3A,3B) so angeordnet sind, dass sie unterschiedliche Bereiche der Förderstrecke des plattenförmigen Werkstücks (W) in der Förderrichtung (R) erfassen, **dadurch gekennzeichnet, dass**
die Mitnehmer (4A,4B) der ersten und der zweiten Messeinrichtung (3A,3B) so ausgestaltet sind, dass sie mit einer Hauptfläche (F) des plattenförmigen Werkstücks (W) koppelbar und von dieser entkoppelbar sind.

2. Die Vorrichtung (1) zum Vermessen von plattenförmigen Werkstücken (W) gemäß Anspruch 1, wobei die Mitnehmer (4A,4B) ausgestaltet sind, um mit dem jeweils zugeordneten Messlineal (5A,5B) kontaktlos oder mechanisch zusammenzuwirken, um die Position und/oder die Bewegungsstrecke des jeweiligen Mitnehmers (4A,4B) in der Förderrichtung (R) zu erfassen.

3. Die Vorrichtung (1) zum Vermessen von plattenförmigen Werkstücken (W) gemäß Anspruch 1 oder 2, wobei die Mitnehmer (4A,4B) jeweils einer Transporteinrichtung (6A,6B) zugeordnet sind, die ausgestaltet ist, um die Bewegung des jeweiligen Mitnehmers (4A,4B) in der Förderrichtung (R) zu führen und den jeweiligen Mitnehmer (4A,4B) in der Richtung (R') entgegengesetzt zu der Förderrichtung (R) über einen Antrieb (7) aktiv zu bewegen.

4. Die Vorrichtung (1) zum Vermessen von plattenförmigen Werkstücken (W) gemäß Anspruch 3, wobei die Mitnehmer (4A,4B) jeweils auf einem Schlitten (8A,8B) angebracht sind, der entlang einer Führung (9) der Transporteinrichtung (6A,6B) bewegbar ist.

5. Die Vorrichtung (1) zum Vermessen von plattenförmigen Werkstücken (W) gemäß Anspruch 4, wobei der Schlitten (8A,8B) in zwei Abschnitte (8a1,8a2) unterteilt ist, die sich relativ zueinander in der Förderrichtung (R) bewegen können und wobei der Mitnehmer (4A,4B) an einem der Abschnitte (8a1,8a2) angebracht ist, der auch mit dem Messlineal (5A,5B) gekoppelt ist, und der andere Abschnitt mit dem Antrieb (6A,6B) gekoppelt ist.

6. Die Vorrichtung (1) zum Vermessen von plattenförmigen Werkstücken (W) gemäß Anspruch 5, wobei die beiden Abschnitte (8a1,8a2) des Schlittens über einen Zylinder (13) miteinander gekoppelt sind, der zwischen einem ersten Zustand, in dem er die beiden Abschnitte (8a1,8a2) starr miteinander verbindet, und einem zweiten Zustand, in dem eine gedämpfte Relativbewegung zwischen den beiden Abschnitten (8a1,8a2) ermöglicht ist, umgeschaltet werden kann.

7. Die Vorrichtung (1) zum Vermessen von plattenförmigen Werkstücken (W) gemäß einem der Ansprüche 3 bis 6, wobei die Transporteinrichtung (6A,6B) einen Linearantrieb oder einen Umlaufantrieb, vorzugsweise ein Schleppband oder eine Schleppkette aufweist.

8. Die Vorrichtung (1) zum Vermessen von plattenförmigen Werkstücken (W) gemäß einem der Ansprüche 1 bis 7, wobei die Mitnehmer (4A,4B) jeweils einen Sauggreifer (11) aufweisen, der an der Hauptfläche (F) des plattenförmigen Werkstücks (W) ankoppelbar und von dieser entkoppelbar ist.

9. Die Vorrichtung (1) zum Vermessen von plattenförmigen Werkstücken (W) gemäß einem der Ansprüche 1 bis 8, wobei die Fördereinrichtung (2) so ausgestaltet ist, dass das plattenförmige Werkstück (W) auf der Fördereinrichtung (2) in einer vertikalen oder in einer gegenüber der Vertikalen geneigten Orientierung befördert werden kann.

10. Die Vorrichtung (1) zum Vermessen von plattenförmigen Werkstücken (W) gemäß einem der Ansprüche 1 bis 9, wobei die Fördereinrichtung (2) einen Rollenförderer oder einen Bandförderer oder eine Kombination derselben aufweist.

11. Die Vorrichtung (1) zum Vermessen von plattenförmigen Werkstücken (W) gemäß einem der Ansprüche 1 bis 10, wobei die Fördereinrichtung (2) einen Förderantrieb aufweist, um das plattenförmige Werkstück (W) aktiv in der Förderrichtung (R) zu befördern.

12. Die Vorrichtung (1) zum Vermessen von plattenförmigen Werkstücken (W) gemäß einem der Ansprüche 1 bis 11, wobei die Vorrichtung eine weitere Messeinrichtung (12) zur Erfassung einer Abmessung des plattenförmigen Werkstücks (W) in einer Richtung (Y) senkrecht zu der Förderrichtung (R) aufweist.

13. Die Vorrichtung (1) zum Vermessen von plattenförmigen Werkstücken (W) gemäß einem der Ansprüche 1 bis 12, mit einer Steuereinrichtung, die ausgestaltet ist, um das Koppeln und Entkoppeln der Mitnehmer (4A,4B) der ersten und der zweiten Messeinrichtung (3A,3B) so zu steuern, dass während der Bewegung des plattenförmigen Werkstücks (W) immer zumindest einer der Mitnehmer (4A,4B) mit diesem gekoppelt ist, und um auf Basis der erfassten Positionen und/oder Bewegungsstrecken der Mitnehmer (4A,4B) der ersten und zweiten Messeinrichtung (3A,3B) eine kumulierte Bewegungsstrecke dieses Werkstücks (W) in der Förderrichtung (R) zu ermitteln.

14. Die Vorrichtung (1) zum Vermessen von plattenförmigen Werkstücken gemäß Anspruch 13 in Verbindung mit Anspruch 10, wobei die Steuereinrichtung ausgestaltet ist, um das Erfassungsergebnis der weiteren Messeinrichtung (12) der über die Mitnehmer (4A,4B) der ersten und zweiten Messeinrichtung (3A,3B) ermittelten kumulierten Bewegungsstrecke des Werkstücks (W) zuzuordnen, um eine Kontur und/oder beliebige Bereiche des Werkstücks zu bestimmen.

## Claims

1. An apparatus (1) for measuring a plate-shaped workpiece (W), in particular of flat glas plate or isulation glas elements, comprising:
a conveying device (2) for conveying the plate-shaped workpiece (W) in a conveying direction (R) along a conveying path;
first measuring device (3A) and second measuring device (3B) wherein each of the measuring devices (3A, 3B) has a driver (4A, 4B) which is konfigured such that it is selectively couplable to and decouplable from the plate-shaped workpiece (W), that, in a coupled state, the driver is moveable together with this workpiece in the conveying direction (R), and that, in a decoupled state, the driver is actively movable in a direction (R') opposite to the conveying direction (R), and
which is assigned to a stationary/fixed measuring ruler (5A, 5B), which extends in the conveying direction (R) such that a position and/or a movement distance of the driver (4A, 4B) in the conveying direction (R) can be detected,
wherein the measuring rulers (5A, 5B) of the first and second measuring devices (3A, 3B) are arranged such that they detect different regions of the conveying path of the plate-shaped workpiece (W) in the conveying direction (R),
**characterised in that**
the drivers (4A, 4B) of the first and second measuring devices (3A, 3B) are configured such that they are couplable to a main surface (F) of the plate-shaped workpiece (W) and are decouplable from this.

2. The apparatus (1) for measuring a plate-shaped workpiece (W) according to claim 1, wherein the drivers (4A, 4B) are designed to interact in a contactless or mechanical manner with the measuring ruler (5A, 5B), respectively assigned, to detect the position and/or the movement distance of the respective driver (4A, 4B) in the conveying direction (R).

3. The apparatus (1) for measuring a plate-shaped workpiece (W) according to claim 1 or 2, wherein the drivers (4A, 4B) are respectively assigned to a transport device (6A, 6B) that is designed to guide movement of the respective driver (4A, 4B) in the conveying direction (R) and to actively move the respective driver (4A, 4B) in the direction (R') opposite to the conveying direction (R) via a drive (7).

4. The apparatus (1) for measuring a plate-shaped workpiece (W) according to claim 3, wherein the drivers (4A, 4B) are respectively mounted on a carriage (8A, 8B) that is movable along a guide (9) of the transport device (6A, 6B).

5. The apparatus (1) for measuring a plate-shaped workpiece (W) according to claim 4, wherein the carriage (8A, 8B) is divided into two sections (8a1, 8a2) that can move relative to one another in the conveying direction (R), and wherein the driver (4A, 4B) is attached to one of the sections (8a1, 8a2), that also is coupled to the measuring ruler (5A, 5B), and the other sectionis coupled to the drive (6A, 6B).

6. The apparatus (1) for measuring a plate-shaped workpiece (W) according to claim 5, wherein the two sections (8a1, 8a2) of the carriage are coupled to each other via a cylinder (13) that can be switch-over between a first state in which the cylinder rigidly connects the two sections (8a1, 8a2) to one another, and a second state in which a damped relative movement between the two sections (8a1, 8a2) is made possible.

7. The apparatus (1) for measuring a plate-shaped workpiece (W) according to one of the claims 3 to 6, wherein the transport device (6A, 6B) comprises a linear drive or a rotary drive, preferably a drag belt or a drag chain.

8. The apparatus (1) for measuring a plate-shaped workpiece (W) according to one of the claims 1 to 7, wherein the drivers (4A, 4B) each have a suction gripper (11) that is couplable to the main surface (F) of the plate-shaped workpiece (W) and is decouplable from this.

9. The apparatus (1) for measuring a plate-shaped workpiece (W) according to one of the claims 1 to 8, wherein the conveying device (2) is configured such that the plate-shaped workpiece (W) is enable to be conveyed on the conveying device (2) in a vertical orientation or in an orientation inclined with respect to vertical.

10. The apparatus (1) for measuring a plate-shaped workpiece (W) according to one of the claims 1 to 9, wherein the conveying device (2) comprises a roller conveyor or a belt conveyor or a combination thereof.

11. The apparatus (1) for measuring a plate-shaped workpiece (W) according to one of the claims 1 to 10, wherein the conveying device (2) comprises a conveying drive for actively conveying the plate-shaped workpiece (W) in the conveying direction (R).

12. The apparatus (1) for measuring a plate-shaped workpiece (W) according to one of the claims 1 to 11, wherein the apparatus comprise a further measuring device (12) to detect a dimension of the plate-shaped workpiece (W) in a direction (Y) perpendicular to the conveying direction (R).

13. The apparatus (1) for measuring a plate-shaped workpiece (W) according to one of the claims 1 to 12, comprising a control unit that is configured to control coupling and decoupling of the drivers (4A, 4B) of the first and second measuring devices (3A, 3B) such that, during movement of the plate-shaped workpiece (W), at least one of the drivers (4A, 4B) is always coupled to this, and to determine a cumulative movement distance of this workpiece (W) in the conveying direction (R) based on the detected positions and/or movement distances of the drivers (4A, 4B) of the first and second measuring devices (3A, 3B).

14. The apparatus(1) for measuring a plate-shaped workpiece (W) according to claim 13 in connection with claim 10, wherein the control unit is designed to assign the detection result of the further measuring device (12) to the cumulative movement distance of the plate-shaped workpiece (W) determined by the drivers (4A, 4B) of the first and second measuring devices (3A, 3B) to determine a contour and/or arbitrary regions of the workpiece.

## Revendications

1. Dispositif (1) pour mesurer des pièces en forme de plaques (W), en particulier des vitres plates ou des éléments en verre isolant, comprenant :
un moyen de transport (2) pour transporter les pièces en forme de plaques (W) dans une direction de transport (R) le long d'un trajet de transport,
un premier moyen de mesure (3A) et un deuxième moyen de mesure (3B), chacun des moyens de mesure (3A, 3B) comprenant un entraîneur (4A, 4B) qui est configuré de manière à pouvoir être couplé sélectivement à une pièce en forme de plaque (W) et être découplé de celle-ci, de manière à pouvoir être déplacé, à l'état couplé, avec ladite pièce dans la direction de transport (R), et de manière à pouvoir être déplacé, à l'état découplé, activement dans une direction (R') opposée à la direction de transport (R), et qui est associé à une règle de mesure (5A, 5B) de préférence fixe/stationnaire qui s'étend dans la direction de transport (R), de telle sorte qu'une position et/ou une distance de déplacement de l'entraîneur (4A, 4B) dans la direction de transport (R) peut/peuvent être détectée(s),
les règles de mesure (5A, 5B) des premier et deuxième moyens de mesure (3A, 3B) étant disposées de manière à couvrir différentes zones du trajet de transport de la pièce en forme de plaque (W) dans la direction de transport (R),
**caractérisé en ce que**
les entraîneurs (4A, 4B) des premier et deuxième moyens de mesure (3A, 3B) sont conçus de manière à pouvoir être couplés à une surface principale (F) de la pièce en forme de plaque (W) et être découplés de celle-ci.

2. Dispositif (1) pour mesurer des pièces en forme de plaques (W) selon la revendication 1,
dans lequel les entraîneurs (4A, 4B) sont conçus pour coopérer sans contact ou mécaniquement avec la règle de mesure (5A, 5B) respectivement associée, afin de détecter la position et/ou la distance de déplacement de l'entraîneur (4A, 4B) respectif dans la direction de transport (R).

3. Dispositif (1) pour mesurer des pièces en forme de plaques (W) selon la revendication 1 ou 2,
dans lequel les entraîneurs (4A, 4B) sont associés chacun à un moyen de transport (6A, 6B) conçu pour guider le mouvement de l'entraîneur (4A, 4B) respectif dans la direction de transport (R) et pour déplacer activement l'entraîneur (4A, 4B) respectif dans la direction (R') opposée à la direction de transport (R) par l'intermédiaire d'un entraînement (7).

4. Dispositif (1) pour mesurer des pièces en forme de plaques (W) selon la revendication 3,
dans lequel les entraîneurs (4A, 4B) sont montés chacun sur un chariot (8A, 8B) qui est mobile le long d'un guide (9) du moyen de transport (6A, 6B).

5. Dispositif (1) pour mesurer des pièces en forme de plaques (W) selon la revendication 4,
dans lequel le chariot (8A, 8B) est subdivisé en deux parties (8a1, 8a2) qui peuvent se déplacer l'une par rapport à l'autre dans la direction de transport (R), et
l'entraîneur (4A, 4B) est monté sur l'une des parties (8a1, 8a2) qui est également couplée à la règle de mesure (5A, 5B), et l'autre partie est couplée à l'entraînement (6A, 6B).

6. Dispositif (1) pour mesurer des pièces en forme de plaques (W) selon la revendication 5,
dans lequel les deux parties (8a1, 8a2) du chariot sont couplées l'une à l'autre par l'intermédiaire d'un vérin (13) commutable entre un premier état dans lequel il relie rigidement les deux parties (8a1, 8a2) et un deuxième état dans lequel un mouvement relatif amorti entre les deux parties (8a1, 8a2) est autorisé.

7. Dispositif (1) pour mesurer des pièces en forme de plaques (W) selon l'une des revendications 3 à 6,
dans lequel le moyen de transport (6A, 6B) comporte un entraînement linéaire ou un entraînement en révolution, de préférence une bande de traction ou une chaîne de traction.

8. Dispositif (1) pour mesurer des pièces en forme de plaques (W) selon l'une des revendications 1 à 7,
dans lequel les entraîneurs (4A, 4B) comportent chacun un préhenseur à ventouse (11) qui peut être couplé à la surface principale (F) de la pièce en forme de plaque (W) et être découplé de celle-ci.

9. Dispositif (1) pour mesurer des pièces en forme de plaques (W) selon l'une des revendications 1 à 8,
dans lequel le moyen de transport (2) est conçu de telle sorte que la pièce en forme de plaque (W) peut être transportée sur le moyen de transport (2) dans une orientation verticale ou dans une orientation inclinée par rapport à la verticale.

10. Dispositif (1) pour mesurer des pièces en forme de plaques (W) selon l'une des revendications 1 à 9,
dans lequel le moyen de transport (2) comprend un convoyeur à rouleaux ou un convoyeur à bande ou une combinaison de ceux-ci.

11. Dispositif (1) pour mesurer des pièces en forme de plaques (W) selon l'une des revendications 1 à 10,
dans lequel le moyen de transport (2) comporte un entraînement de transport pour transporter activement la pièce en forme de plaque (W) dans la direction de transport (R).

12. Dispositif (1) pour mesurer des pièces en forme de plaques (W) selon l'une des revendications 1 à 11,
dans lequel le dispositif comporte un autre moyen de mesure (12) pour détecter une dimension de la pièce en forme de plaque (W) dans une direction (Y) perpendiculaire à la direction de transport (R).

13. Dispositif (1) pour mesurer des pièces en forme de plaques (W) selon l'une des revendications 1 à 12,
comprenant un moyen de commande qui est conçu pour commander le couplage et le découplage des entraîneurs (4A, 4B) des premier et deuxième moyens de mesure (3A, 3B) de telle sorte, pendant le déplacement de la pièce en forme de plaque (W), c'est toujours au moins l'un des entraîneurs (4A, 4B) qui est couplé à celle-ci, et pour déterminer, sur la base des positions et/ou des distances de déplacement détectées des entraîneurs (4A, 4B) des premier et deuxième moyens de mesure (3A, 3B), une distance de déplacement cumulée de cette pièce (W) dans la direction de transport (R).

14. Dispositif (1) pour mesurer des pièces en forme de plaques selon la revendication 13 en combinaison avec la revendication 10,
dans lequel le moyen de commande est conçu pour associer le résultat de détection de l'autre moyen de mesure (12) à la distance de déplacement cumulée de la pièce (W), déterminée par l'intermédiaire des entraîneurs (4A, 4B) des premier et deuxième moyens de mesure (3A, 3B), afin de déterminer un contour et/ou des zones quelconques de la pièce.
